# EUROPEAN PATENT SPECIFICATION

(11) **EP 1 045 608 B1**
(45) Date of publication and mention of the grant of the patent: **22.12.2004**
(21) Application number: 98107590.6
(22) Date of filing: 25.04.1998
(51) Int. Cl.: H04Q 7/38

(54) **A method for network selection for mobile digital communication systems**
Verfahren für Netzwerkauswahl für mobile digitale Kommunikationssysteme
Procédé de sélection de réseaux pour des systèmes mobiles numériques

(43) Date of publication of application: 18.10.2000
(73) Proprietor: Siemens Aktiengesellschaft, 80333 München (DE)
(72) Inventor: Bisgaard, Peter, 9440 Aabybro (DK)

(56) References cited:
- EP-A- 0 781 064
- MOULY M ET AL: "PAGING AND LOCATION AREAS" 1 January 1993 , GSM SYSTEM FOR MOBILE COMMUNICATIONS, PAGE(S) 442 - 458 , MOULY M;PAUTET M-B XP002038439 * page 446, line 20 - page 452, line 30 *

## Description

### BACKGROUND OF THE INVENTION

The present invention relates to a method for network selection for a mobile digital communication system having a plurality of mobile stations being adapted to communicate over a selected one of a plurality of networks originating from different countries, said networks providing the mobiles with respective identifications including an associated country identification code.

Although applicable to any mobile digital communication system, the present invention and its underlying problems will be discussed with particular reference to GSM mobile systems.

In current standard GSM mobile communication systems, there are two concepts for network selection which all GSM mobiles must support, and it is very likely that UMTS (Universal Mobile Telecommunication System) will inherit these concepts from GSM when UMTS standard is made. All GSM mobiles must provide the user with an automatic and a manual selection mode.

In the automatic selection mode, the mobile station selects the network to enter service on automatically, i.e. by means of a dedicated intelligent control circuit. The procedure performed by this circuit is the following. When the mobile is switched on, it will search for the network it was oh service at the time it was switched off. If this network is available, said network will be selected. If this network is not or no longer available, the mobile will automatically choose among other available and preferred networks.

The search and judgement of availability usually involves the measurement of the electric field strength of the networks wherefrom radio signals may be received. Typically all networks whose field strength lies above a certain threshold will be entered into a list of available networks, either ordered by signal strength or by predetermined priority or preference rules. In other words, the user has a possibility to give priority to the networks he prefers by editing a list of preference which is stored on the SIM. This list is used by the mobile to sort the list of available networks such that registration is attempted on the networks in the order they are listed in the list of preference.

In the manual selection mode, the mobile station selects the network to enter service on by manual input of the user. By means of the dedicated intelligent control circuit, the mobile provides the user with a list of all currently available networks, and the user must then choose one of these, f.e. by pushing a select button. The mobile will then stay on service on this network, and if coverage is lost, the user is provided with a new list of all networks available at that time and site.

Usually a mobile is subscribed to a single network called its home network. When a mobile enters service on another network which it is not subscribed to, this is called roaming. The roaming concept is typically divided into two cases, the national roaming and the international roaming, depending on whether the network into which the mobile logs in belongs to the same country as its home network or not.

Instead of having to provide coverage in the complete country, two or more operators can cooperate by making a national roaming agreement. This means that subscribers from one network may obtain service by using another network in areas where their home network does not provide coverage. Hence, a new operator on the market with very little coverage is able to obtain practically full coverage from the day he launches his operation by having such roaming agreement(s).

In case a mobile which is subscribed a new operator is in automatic selection mode, it will automatically enter service on another network when it moves out of coverage from its home network.

Usually, mobiles using national roaming have implemented a timer which effects that the mobile, if it has lost its home network and is in service on a foreign network, will periodically search for its home network and return to it in case it is available again.

Such a timer is not used in the international roaming case as this will reduce the stand-by time, as the search for the home network consumes energy and it is unprobable that in a foreign country the home network will be found after a short time.

Mouly M, Pautet M-B; GSM System for mobile communications, 01-01-1993; Pages 442 - 458: Chapter 7.1.2. Cell and PLMN selection, discloses selection of mobile networks wherein the mobile station identifies PLMNs which are available to offer service in the location of the terminal. The network is selected manually or automatically by using lists in the terminal of preferred networks and of forbidden networks.

The use of the automatic and manual selection modes in GSM is described thoroughly is GSM 02.11, ETS 300 507, and GSM 03.22, ETS 300 535.

The two known selection modes involve the so-called border area problem which can occur in border areas between two or more adjacent countries, as described in GSM MoU TWG Technical Note 3, version 4.0, Network Selection in border areas. As radio waves aren't stopped by national country borders, there are areas in which a mobile station is able to enter normal service operation on networks from more than one country. From the user's point of view, entering service on a network of a foreign country is problematic, as calling with the mobile station can be much more expensive than under normal conditions, i.e. under service on national networks.

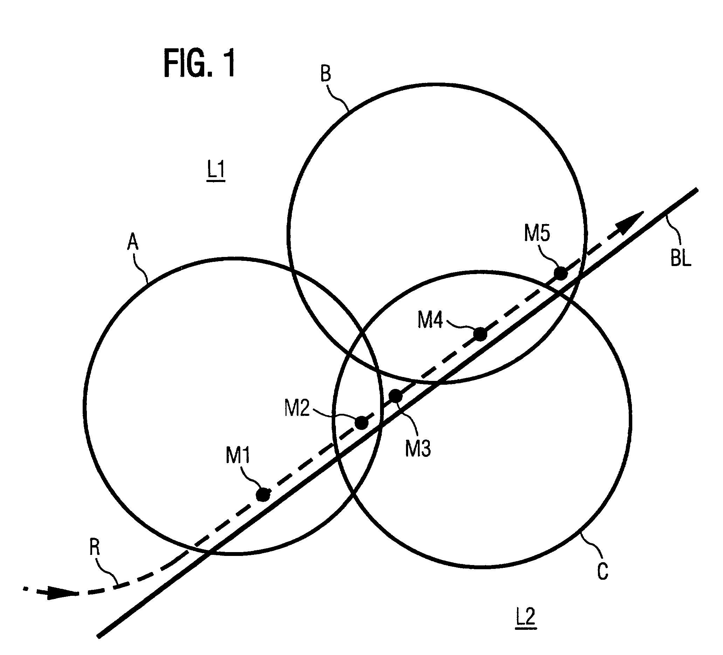

In the following, the particular problems arising in the two above described known selection modes will be discussed with reference to Fig. 1 which is a schematic illustration of exemplary coverage conditions at a country border to discuss the problems with the prior art.

In Fig. 1 reference sign BL denotes a borderline between the two countries L1 and L2. In the shown area of country L1, two national networks A and B are available in respective coverage regions indicated by first circle sections of circles A and B. Moreover, in the shown area of country L1, one foreign network C is available in a coverage region indicated by a first circle section of circle C.

On the other hand, in the shown area of country L2, the national network C is available in a coverage region indicated by the complementary second circle section of circle C; and in the shown area of country L2, the two foreign networks A and B are available in respective coverage regions indicated by complementary second circle sections of circles A and B.

The dashed line R denotes a route of a mobile through the shown area of country L1, i.e. its home country, in the vicinity of the borderline BL, and M1 to M5 denote five special mobile positions passed by the mobile one after another.

In automatic mode, there is the possibility that the mobile will roam onto a foreign network in the border area. This happens if the mobile temporarily looses coverage from its current national network (home network or national roaming network). In Fig. 1 such a situation would be encountered at mobile position M3 when coming from M1 via M2, namely at this point the mobile would enter service on foreign network C. Since no timer is implemented for this situation of international roaming, the mobile will stay in service on foreign network C until it looses connection therewith, i.e. at mobile position M5 in Fig. 1. On the other hand, the international roaming would only be necessary until the mobile enters the coverage of network B shortly after mobile position M3.

The problem is that the price payed for making and receiving calls is considerably higher in foreign network C. In case of an incoming call, the calling party only pays the price for a regular national call, however, the mobile subscriber pays for routing the call from its home country, here L1, to the foreign network C of country L2. In case the mobile subscriber initiates a call while internationally roaming on foreign network C, he won't only pay the price for a regular national call, but additionally pay the price for routing the call from the foreign country, here L2, to its home country L1. Thus, in both directions the price is considerably enhanced.

Due to the border area problem, mobile subscribers living in border areas are currently better off using the manual selection mode, where the mobile will only search for available networks, however, the selection itself is carried out manually by the user. Here the problem is that the manual selection mode prevents national roaming from occuring automatically, which means that the user has to bother all the time whether the mobile is still on service or not. Manual selection is therefore annoying to a user who often needs national roaming.

In summary, the state of the art in form of manual and automatic selection mode having a timer for national roaming but no timer for international roaming as discussed above does not provide any comfortable solution to the border area problem.

The border area problem has been discussed for some time in ETSI. As a possible solution, it has been suggested to implement a timer for international roaming as it is done in the case of national roaming. This suggestion, however, has so far been rejected in ETSI as on one hand it would reduce the stand-by time of the mobiles implementing such a feature as already mentioned above and on the other hand it would be an expensive solution for a problem which only occurs in border areas for a small percentage of the users.

Another suggestion has been to let the user make his own forbidden list, such that he could define which networks he does not want to receive service from. However, this solution is not satisfactory either, as the user would have to enable and disable such an exclusion when travelling (f.e. for holidays) into the country of the network he wishes to exclude when being at home. Moreover, the exclusion would have to be modified depending on at which border area the user is on tour and depending on the coverage density of national networks in this border area. Finally, the network providers do not like the idea that the user can prevent the mobile to access their networks in this manner.

### SUMMARY OF THE INVENTION

The present invention provides a method as defined in independent claim 1. Preferred embodiments of the present invention are listed in the dependent claims.

The core idea of the present invention is to introduce a third mode of network selection which helps to avoid the problems cited above. In the third mode which is called country selection mode, the user must choose a country manually instead of a network. Thus, in country selection mode the mobile must only attempt to enter service on networks which belong to a specified country. Within that country the mobile works exactly in the same manner as in automatic mode.

Advantageously, by having the country selection mode, mobile users living in border areas can avoid undesired international roaming to networks of neighbour countries while still having the automatic national roaming capability. In particular, the country selection mode is very easy and inexpensive to implement in the existing concepts for cellular telephony. Namely, it is possible to provide the manual and automatic modes explained above and to modify the automatic mode such that it only attempts service on the networks having the entered and stored country identification code of the desired country.

According to a preferred embodiment, a priority order is assigned to the plurality of networks; and if more than one network of the desired country is available, the network is selected according to said priority order. The priority can be entered from outside and stored or can be internally determined, f.e. under consideration of the respective field strength values.

According to a further preferred embodiment, the available networks are determined and a corresponding list of the currently available countries is presented to the user who selects this new mode. This helps to inform the uses about his choice of countries.

According to a further preferred embodiment, if the mobile is just switched on, the availability of a network it was on service at the time it was switched off is determined; if said network is available, said network is selected, and if not, the step of determining is continued.

According to a further preferred embodiment, if coverage of a formerly selected network is lost, the steps of the determination of the availability and the selection are repeated.

According to a further preferred embodiment, a manual mode is selectable wherein the mobile provides a list of all currently available networks, and one of these is may be selected.

According to a further preferred embodiment, if coverage of a formerly selected network is lost, a new list of all networks available at that time and site is provided.

According to a further preferred embodiment, the mobiles comprise a timer means which periodically initializes the step of determining the availability of the mobile's home network, if the entered country identification code is the home country identification code, and which is deactivated, if not. Thus, the national roaming concept will work in the same manner as it does in mobiles having the known manual and automatic selection modes.

According to a further preferred embodiment, a current selection mode, and preferably an input country identification code, is stored in a non-volatile memory and used again when the mobile is powered off and on again. This involves the advantage the mobile will stay in a selected mode until the mode is changed by the user.

### BRIEF DESCRIPTION OF THE DRAWINGS

The present invention will become more fully understood by the following detailed description of a preferred embodiment thereof in conjunction with the accompanying drawing, in which Fig. 1 which is a schematic illustration of exemplary coverage conditions at a country border.

### DESCRIPTION OF THE PREFERRED EMBODIMENTS

The following embodiment is relatively easy to implement in an existing mobile. In principle, the mobile must simply perform as it does in the known automatic mode, however, the country identification code of a desired country from which a selectable network must originate has to be entered and stored in the mobile. When determining the availability of any network having said entered country identification code from said mobile, a comparison must be made to compare the country identification code of the respective networks with the one designated by the user.

Thus, from the apparative view, a control procedure has to be slightly modified and an extra storage area for the code of the desired country in the existing memory be provided.

Particularly, in GSM standard each network transmits a code comprising five digits, where the first three digits identify the country and the last two digits identify the network in this country. For instance, the Danish operator Tele Danmark Mobile has the code 238-02, where 238 stands for Denmark and 02 for the operator.

The mobile of this embodiment has three modes, namely the known automatic and manual selection modes explained above and the new country selection mode.

With reference to Fig. 1, when the user switches on the mobile at mobile position M1 and selects the new country selection mode, the mobile searches available networks and then presents a corresponding list of the currently available countries (only country L1 at position M1), instead of a list of networks as it does in the manual selection mode. Thereafter, it asks the user to input a desired country identification code, f.e. by displaying a corresponding message on its LCD display window.

After having received the user's input by means of the push button panel, the mobile stores the desired country identification code, here the country identification code of country L1.

Now the mobile starts determining the availability of any network having said entered country identification code from said mobile; and since network A of the desired country L1 is available at mobile position M1, said network A is selected by the mobile, which network A the mobile is subscribed to.

When passing position M2, nothing happens, because network A is still available. At position M3, the coverage of network A is lost, and in principle service on network C could be obtained. However, since the desired country is L1 and network C belongs to country L2, no service on network C will be attempted. Instead a message is displayed on the LCD display window saying SEARCHING NETWORK" or NO SERVICE AVAILABLE".

At position M4, the mobile is again in service on network B which has the desired country identification code, however, is not its home network.

Thus, at position M5, the timer means initializes the step of determining the availability of the mobile's home network A, however, the determination is negative and the service on network B is kept. This is periodically repeated until a registration on network A is possible again.

Although the present invention has been described with respect to a preferred embodiment thereof, it should be understood that many modifications can be performed without departing from the scope of the invention as defined by the appended claims.

Although in the described embodiment a single country identification code of a desired country from which a selectable network must originate was entered and stored, the mobiles could be designed such that there is the possibility of entering and storing the country identification codes of a plurality of desired countries from which a selectable network must originate.

Simultaneously an assignment of a priority order to the plurality of countries could be made. If at least one network of the desired countries is available, there would be a selection of said one network according to said priority order, otherwise the step of determining the availability would be continued.

### A Method for Network Selection for Mobile Digital Communication Systems

| LIST OF REFERENCE SIGNS: | |
|---|---|
| L1, L2 | countries |
| A, B | networks of country L1 |
| C | network of country L2 |
| BL | borderline |
| M1 - M5 | mobile positions |
| R | route of mobile |

## Claims

1. A method for network selection for a mobile digital communication system having a plurality of mobile stations being adapted to communicate over a selected one of a plurality of networks originating from different countries, said networks (A, B, C) providing the mobiles with respective identifications including an associated country identification code, comprising the steps of:
a) entering and storing the country identification code of a desired country (L1) from which a selectable network (A, B) must originate in a mobile;
b) determining the availability of any network having said entered country identification code from said mobile; and
c) if at least one network (A, B) of the desired country is available, selecting said one network by said mobile, and if not, continuing the step of determining.

2. A method according to claim 1, comprising the steps of assigning a priority order to the plurality of networks (A, B, C); and if more than one network (A, B) of the desired country is available, selecting the network according to said priority order.

3. A method according to claim 1 or 2, comprising the steps of determining the available networks and presenting a corresponding list of the currently available countries.

4. A method according to one of the preceeding claims, comprising the steps of:
if the mobile is just switched on, determining the availability of a network it was on service at the time it was switched off; if this network is available, selecting said network, otherwise continuing the step of determining.

5. The method according to claim 1, wherein if coverage of a formerly selected network is lost, steps b) and c) are repeated.

6. The method according to one of the preceeding claims, comprising the steps of:
selecting a manual mode wherein the mobile provides a list of all currently available networks, and one of these is selectable.

7. The method according to claim 6, wherein if coverage of a formerly selected network is lost, the a new list of all networks available at that time and site is provided.

8. The method according to one of the preceeding claims, wherein the mobiles comprise a timer means which periodically initializes the step of determining the availability of the mobile's home network, if the entered country identification code is the home country identification code, and which is deactivated, if not.

9. The method according to one of the preceeding claims, wherein a current selection mode, and preferably an input country identification code, is stored in a non-volatile memory and used again when the mobile is powered off and on again.

## Patentansprüche

1. Ein Verfahren für die Netzwerkauswahl in einem mobilen digitalen Kommunikationssystem mit mehreren Mobilstationen, die für die Kommunikation über eines von mehreren Netzwerken in verschiedenen Ausgangsländern ausgelegt sind, wobei diese Netzwerke (A, B, C) entsprechende Kennungen für die einzelnen Mobilstationen bereitstellen, die unter anderem einen eindeutigen Ländercode umfassen. Die einzelnen Schritte dieses Verfahrens sind:
a) Mobilstationsseitige Eingabe und Speicherung des Länderidentifikationscodes für ein bestimmtes Land (L1), in dem sich das zur Auswahl stehende Netzwerk (A, B) befinden muss;
b) Bestimmung der Verfügbarkeit aller Netzwerke mit dem besagten Länderidentifikationscode an der Mobilstation;
c) Wenn mindestens ein Netzwerk (A, B) in dem gewünschten Land verfügbar ist: Auswahl dieses besagten einen Netzwerks durch die besagte Mobilstation; anderenfalls Fortsetzung der Verfügbarkeitsprüfung.

2. Ein Verfahren gemäß Anspruch 1 mit folgenden Schritten:
Zuweisung einer Prioritätenfolge für die einzelnen Netzwerke (A, B, C) und Auswahl eines Netzwerks gemäß dieser besagten Prioritätenfolge, falls mehrere Netzwerke (A, B) in dem gewünschten Land verfügbar sind.

3. Ein Verfahren gemäß Anspruch 1 oder 2 mit folgenden Schritten:
Bestimmung der verfügbaren Netzwerke und Ausgabe einer entsprechenden Liste mit allen derzeit verfügbaren Ländern.

4. Ein Verfahren gemäß einem der vorgenannten Ansprüche mit folgenden Schritten:
Unmittelbar nach dem Einschalten der Mobilstation: Feststellung, ob das zum Abschaltungszeitpunkt genutzte Netzwerk nach wie vor verfügbar ist; ist dies der Fall, Auswahl des betreffenden Netzwerks, anderenfalls Fortsetzung der Verfügbarkeitsprüfung.

5. Ein Verfahren gemäß Anspruch 1, bei dem die Schritte b) und c) wiederholt werden, wenn der Deckungsbereich des zuvor gewählten Netzwerks verlassen wurde.

6. Ein Verfahren gemäß einem der vorgenannten Ansprüche mit folgenden Schritten:
Aktivierung einer manuellen Betriebsart, bei der die Mobilstation eine Liste aller derzeit verfügbaren Netzwerke ausgibt, und eines dieser Netze auswählbar ist.

7. Ein Verfahren gemäß Anspruch 6, bei dem eine aktualisierte Liste aller Netzwerke, die für den jeweiligen Zeitpunkt und Standort verfügbar sind, ausgegeben wird, sobald der Deckungsbereich eines zuvor gewählten Netzwerks verlassen wird.

8. Ein Verfahren gemäß einem der vorgenannten Ansprüche, bei dem die Mobilstationen mit einem Zeitgeber ausgestattet sind, der bewirkt, dass der Schritt, in dem die Verfügbarkeit des Stammnetzwerks der Mobilstation festgestellt wird, in regelmäßigen Abständen wiederholt wird, wenn es sich bei dem eingegebenen Länderidentifikationscode um den Identifikationscode des Heimatlandes handelt; anderenfalls wird der Zeitgeber deaktiviert.

9. Ein Verfahren gemäß einem der vorgenannten Ansprüche, bei dem der aktuelle Auswahlmodus und vorzugsweise auch der eingegebene Länderidentifikationscode in einem nichtflüchtigen Speicher abgelegt und beim Aus- und erneuten Einschalten der Mobilstation wieder verwendet wird.

## Revendications

1. Procédé de sélection de réseau pour un système de communication numérique mobile possédant une pluralité de stations mobiles adaptées pour communiquer sur l'un sélectionné d'une pluralité de réseaux en provenance de différents pays, lesdits réseaux (A, B, C) fournissant aux mobiles des identifications respectives incluant un code d'identification de pays associé, comprenant les étapes suivantes :
a) entrer et stocker dans un mobile le code d'identification de pays d'un pays souhaité (L1) depuis lequel un réseau sélectionnable (A, B) doit provenir;
b) déterminer la disponibilité d'un réseau quelconque possédant ledit code d'identification de pays entré dans ledit mobile; et
c) si au moins un réseau (A, B) du pays souhaité est disponible, sélectionner ledit un réseau par ledit mobile, et sinon, continuer l'étape de détermination.

2. Procédé selon la revendication 1, comprenant les étapes de : affecter un ordre de priorité à la pluralité de réseaux (A, B, C) ; et si plusieurs réseaux (A, B) du pays souhaité sont disponibles, sélectionner le réseau conformément audit ordre de priorité.

3. Procédé selon la revendication 1 ou 2, comprenant les étapes de :
déterminer les réseaux disponibles et présenter une liste correspondante des pays actuellement disponibles.

4. Procédé selon l'une des revendications précédentes, comprenant les étapes de :
si le mobile vient juste d'être allumé, déterminer la disponibilité d'un réseau sur lequel il était en service au moment où il a été éteint; et si ce réseau est disponible, sélectionner ledit réseau, sinon continuer l'étape de détermination.

5. Procédé selon la revendication 1, dans lequel, si la couverture d'un réseau sélectionné auparavant est perdue, les étapes b) et c) sont répétées.

6. Procédé selon l'une des revendications précédentes, comprenant les étapes de :
sélectionner un mode manuel dans lequel le mobile fournit une liste de tous les réseaux actuellement disponibles, et l'un de ceux-ci est sélectionnable.

7. Procédé selon la revendication 6, dans lequel si la couverture d'un réseau sélectionné auparavant est perdue, une nouvelle liste de tous les réseaux disponibles à cet instant et à cet endroit est fournie.

8. Procédé selon l'une des revendications précédentes, dans lequel les mobiles comprennent un moyen de temporisation qui initialise périodiquement l'étape de détermination de la disponibilité du réseau nominal du mobile, si le code d'identification de pays entré est le code d'identification de pays du domicile, et qui est désactivé si ce n'est pas le cas.

9. Procédé selon l'une des revendications précédentes, dans lequel un mode de sélection courant, et de préférence un code d'identification de pays d'entrée, sont stockés dans une mémoire rémanente et sont de nouveau utilisés lorsque le mobile est éteint et rallumé.
